# EUROPEAN PATENT SPECIFICATION

(11) **EP 1 735 127 B1**
(45) Date of publication and mention of the grant of the patent: **31.07.2013**
(21) Application number: 05711676.6
(22) Date of filing: 20.01.2005
(51) Int. Cl.: B24B 37/04, B24B 41/06, B24B 7/17

(54) **WAFER CLAMPING DEVICE FOR A DOUBLE SIDE GRINDER**
WAFERKLEMMVORRICHTUNG FÜR EINE DOPPELSEITENSCHLEIFVORRICHTUNG
DISPOSITIF DE MAINTIEN DE PLAQUETTE POUR MEULEUSE DOUBLE FACE

(30) Priority: 19.03.2004 US 554684 P
(43) Date of publication of application: 27.12.2006
(73) Proprietor: MEMC Electronic Materials, Inc., St. Peters, Missouri 63376 (US)
(72) Inventor: BHAGAVAT, Milind, S., Columbia, MO 65202 (US); GUPTA, Puneet, St. Louis, MO 63144 (US); VANDAMME, Roland, Wentzville, MO 63385 (US); KAZAMA, Takuto, Utsunomiya City, Tochigi 321-32 (JP); TACHI, Noriyuki, Utsunomiya City, Tochigi 321-32 (JP)
(74) Representative: Parchmann, Stefanie
(86) International application number: PCT/US2005/001732
(87) International publication number: WO 2005/095054

(56) References cited:
- EP-A- 1 118 429
- WO-A-02/11947
- US-A- 2 448 751
- US-A1- 2002 185 053
- US-A1- 2003 017 787
- PATENT ABSTRACTS OF JAPAN vol. 2000, no. 13, 5 February 2001 (2001-02-05) & JP 2000 280155 A (KOYO MACH IND CO LTD), 10 October 2000 (2000-10-10)

## Description

### BACKGROUND OF THE INVENTION

This invention relates generally to simultaneous double side grinding of semiconductor wafers and more particularly to a wafer-clamping device for use with a double side grinder.

Semiconductor wafers are commonly used in the production of integrated circuit chips on which circuitry is printed. The circuitry is first printed in miniaturized form onto surfaces of the wafers, then the wafers are broken into circuit chips. But this smaller circuitry requires that wafer surfaces be extremely flat and parallel to ensure that the circuitry can be properly printed over the entire surface of the wafer. To accomplish this, a grinding process is commonly used to improve certain features of the wafers (e.g., flatness and parallelism) after they are cut from an ingot.

Simultaneous double side grinding operates on both sides of the wafer at the same time and produces wafers with highly planarized surfaces. It is therefore a desirable grinding process. Double side grinders that can be used to accomplish this include those manufactured by Koyo Machine Industries Co., Ltd. These grinders use a wafer-clamping device to hold the semiconductor wafer during grinding. The clamping device typically comprises a pair of hydrostatic pads and a pair of grinding wheels. The pads and wheels are oriented in opposed relation to hold the wafer therebetween in a vertical orientation. The hydrostatic pads beneficially produce a fluid barrier between the respective pad and wafer surface for holding the wafer without the rigid pads physically contacting the wafer during grinding. This reduces damage to the wafer that may be caused by physical clamping and allows the wafer to move (rotate) tangentially relative to the pad surfaces with less friction. While this grinding process significantly improves flatness and parallelism of the ground wafer surfaces, it can also cause degradation of the topology of the wafer surfaces.

In order to identify and address the topology degradation concerns, device and semiconductor material manufacturers consider the nanotopology of the wafer surfaces. Nanotopology has been defined as the deviation of a wafer surface within a spatial wavelength of about 0.2 mm to about 20 mm. This spatial wavelength corresponds very closely to surface features on the nanometer scale for processed semiconductor wafers. The foregoing definition has been proposed by Semiconductor Equipment and Materials International (SEMI), a global trade association for the semiconductor industry (SEMI document 3089). Nanotopology measures the elevational deviations of one surface of the wafer and does not consider thickness variations of the wafer, as with traditional flatness measurements. Several metrology methods have been developed to detect and record these kinds of surface variations. For instance, the measurement deviation of reflected light from incidence light allows detection of very small surface variations. These methods are used to measure peak to valley (PV) variations within the wavelength.
JP 2000-280155, discloses a double surface grinder for a circular workpiece, having a pair of grinding wheels with grinding surfaces facing each other and moved relatively to each other in an axial direction.

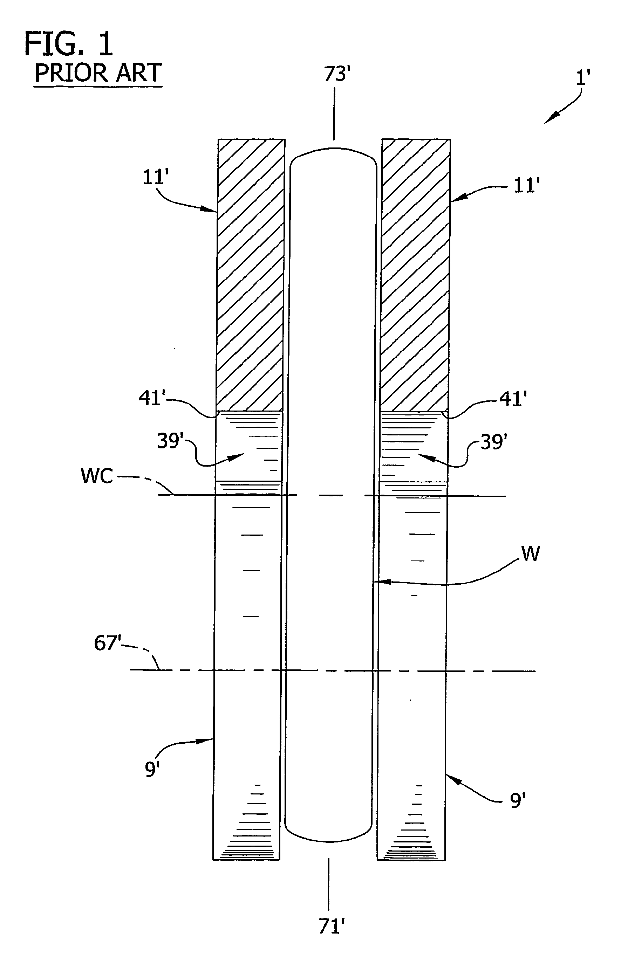

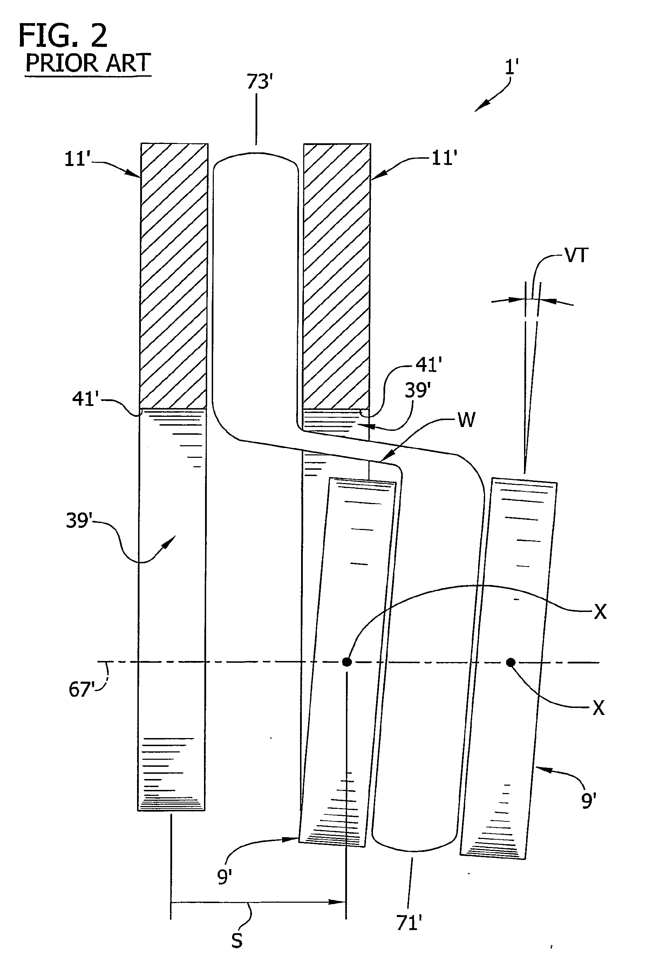

A typical wafer-clamping device 1' of a double side grinder of the prior art such as the Koyo STS grinder which is discussed in broad terms in JP2000280155A and is schematically shown in Figs. 1 and 2. Grinding wheels 9' and hydrostatic pads 11' hold the wafer W independently of one another. They respectively define clamping planes 71' and 73'. A clamping pressure of the grinding wheels 9' on the wafer W is centered at a rotational axis 67' of the wheels, while a clamping pressure of the hydrostatic pads 11' on the wafer is centered near a center WC of the wafer. As long as clamping planes 71' and 73' are held coincident during grinding (Fig. 1), the wafer remains in plane (i.e., does not bend) and is uniformly ground by wheels 9'. A general discussion regarding alignment of clamping planes may be found in published European Appl. No. 1,118,429. However, if the two planes 71' and 73' become misaligned, the clamping pressures of the grinding wheels 9' and hydrostatic pads 11' produce a bending moment, or hydrostatic clamping moment, in the wafer W that causes the wafer to bend sharply generally adjacent peripheral edges 41' of the grinding wheel openings 39' (Fig. 2). This produces regions of high localized stress in the wafer W.

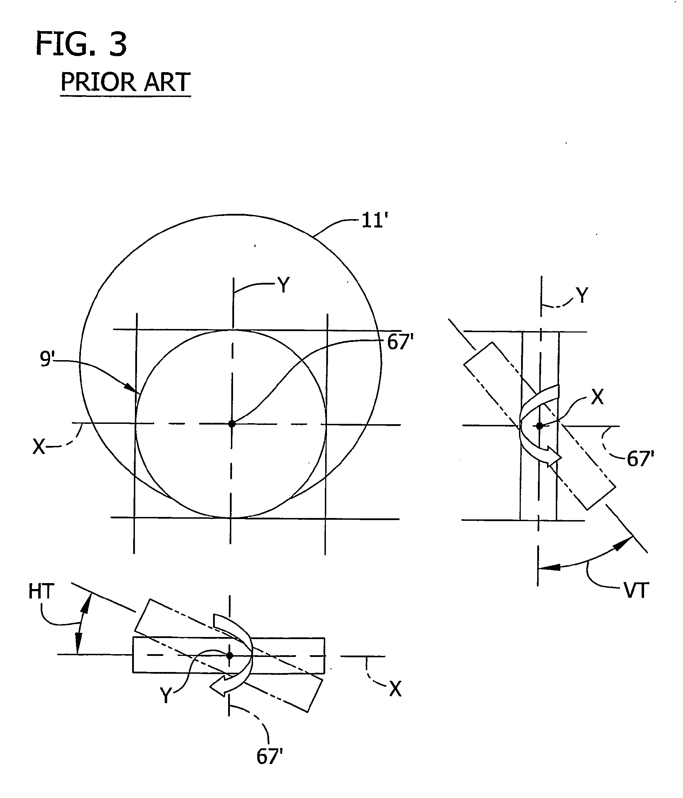

Misalignment of clamping planes 71' and 73' is common during double side grinding operation and is generally caused by movement of the grinding wheels 9' relative to the hydrostatic pads 11' (Fig. 2). Possible modes of misalignment are schematically illustrated in Figs. 2 and 3. These include a combination of three distinct modes. In the first mode there is a lateral shift S of the grinding wheels 9' relative to the hydrostatic pads 11' in translation along an axis of rotation 67' of the grinding wheels (Fig. 2). A second mode is characterized by a vertical tilt VT of the wheels 9' about a horizontal axis X through the center of the respective grinding wheel (Figs. 2 and 3). Figure 2 illustrates a combination of the first mode and second mode. In a third mode there is a horizontal tilt HT of the wheels 9' about a vertical axis Y through the center of the respective grinding wheel (Fig. 3). These modes are greatly exaggerated in the drawings to illustrate the concept; actual misalignment may be relatively small. In addition, each of the wheels 9' is capable of moving independently of the other so that horizontal tilt HT of the left wheel can be different from that of the right wheel, and the same is true for the vertical tilts VT of the two wheels.

The magnitude of hydrostatic clamping moments caused by misalignment of clamping planes 71' and 73' is related to the design of the hydrostatic pads 11'. For example, higher moments are generally caused by pads 11' that clamp a larger area of the wafer W (e.g., pads that have a large working surface area), by pads in which a center of pad clamping is located a relatively large distance apart from the grinding wheel rotational axis 67', by pads that exert a high hydrostatic pad clamping force on the wafer (i.e., hold the wafer very rigidly), or by pads that exhibit a combination of these features.

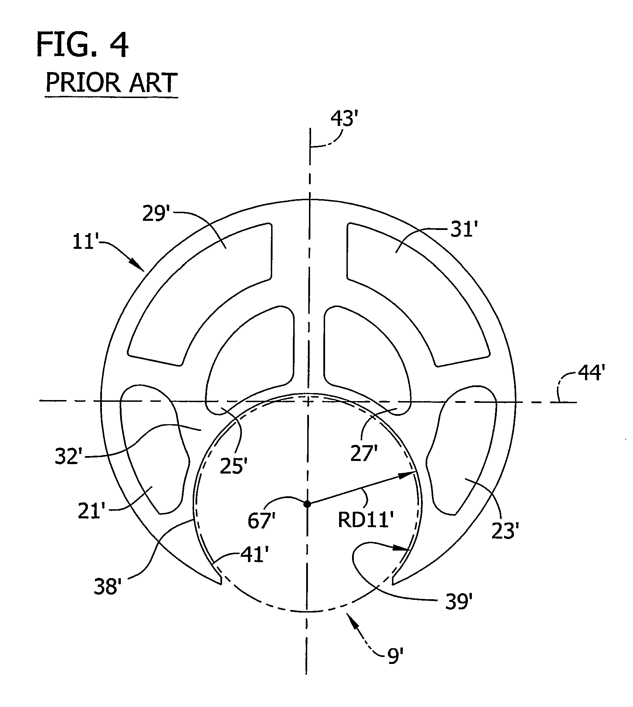

In clamping device 1' using prior art pads 11' (an example of one prior art pad is shown in Fig. 4), the bending moment in wafer W is relatively large when clamping planes 71' and 73' misalign because the wafer is clamped very tightly and rigidly by the pads 11', including near peripheral edges 41' of grinding wheel opening 39'. The wafer cannot adjust to movement of grinding wheels 9' and the wafer bends sharply near opening edges 41' (Fig. 2). The wafers W are not uniformly ground and they develop undesirable nanotopology features that cannot be removed by subsequent processing (e.g., polishing). Misalignment of clamping planes 71' and 73' can also cause the grinding wheels 9' to wear unevenly, which can further contribute to development of undesirable nanotopology features on the ground wafer W.

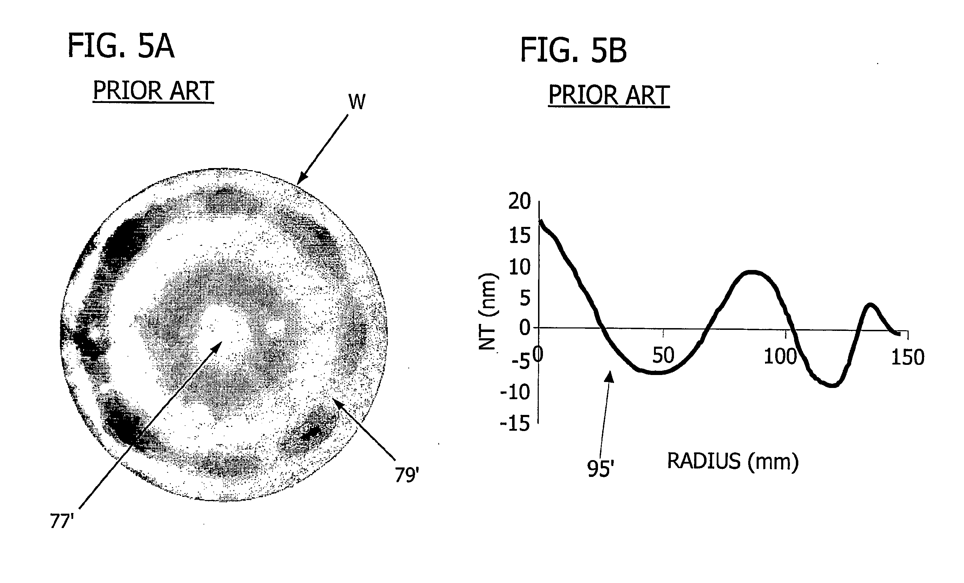

Figures 5A and 5B illustrate undesirable nanotopology features that can form on surfaces of a ground wafer W when clamping planes 71' and 73' misalign and the wafer bends during the grinding operation. The features include center-marks 77' and B-rings 79' (Fig. 5A). The center-marks 77' are generally caused by a combination of lateral shift S and vertical tilt VT of the grinding wheels 9', while the B-rings 79' are generally caused by a combination of lateral shift S and horizontal tilt HT of the wheels. As shown in Fig. 5B, both features 77' and 79' have relatively large peak to valley variations associated with them. They are therefore indicative of poor wafer nanotopology and can significantly affect ability to print miniaturized circuitry on wafer surfaces.

Misalignment of hydrostatic pad and grinding wheel clamping planes 71' and 73' causing nanotopology degradation can be corrected by regularly aligning the clamping planes. But the dynamics of the grinding operation as well as the effects of differential wear on the grinding wheels 9' cause the planes to diverge from alignment after a relatively small number of operations. Alignment steps, which are highly time consuming, may be required so often as to make it a commercially impractical way of controlling operation of the grinder.

Accordingly, there is a need for a hydrostatic pad usable in a wafer-clamping device of a double side grinder capable of effectively holding semi-conductor wafers for processing but still forgiving to movement of grinding wheels so that degradation of wafer surface nanotopology is minimized upon repeated grinder operation.

### SUMMARY OF THE INVENTION

This invention relates to a hydrostatic pad according to claim 1 for use in holding a workpiece during grinding of the workpiece by grinding wheels, the hydrostatic pad comprising: a body for holding the workpiece during grinding, the body having a working surface area and a horizontal axis; an opening formed in the body for receiving a first grinding wheel therethrough into engagement with the workpiece; at least one pocket formed in the body and being adapted for receiving fluid through the body into the pocket for providing a barrier between the body and the workpiece and for applying pressure to the workpiece during grinding, a total pocket surface area of all pockets in the body being less than said working surface area of the body such that a ratio of the pocket surface area to the working surface area is less than 0.26; and a free region recessed in the body between the peripheral edge of said opening and the radially opposed one pocket, the pad applying substantially no clamping pressure to the workpiece at the edge of the one pocket, said edge being spaced apart from the peripheral edge of the opening in the body such that the free region is therebetween.
The invention relates also to a double side grinding process according to claim 15.

### BRIEF DESCRIPTION OF THE DRAWINGS

FIG. 1 is a schematic side elevation of a wafer-clamping device of the prior art, including hydrostatic pads and grinding wheels with a semiconductor wafer positioned therebetween and the hydrostatic pads shown in section;

FIG. 2 is a schematic side elevation similar to FIG. 1, but with the grinding wheels laterally shifted and vertically tilted;

FIG. 3 is a schematic front elevation thereof illustrating horizontal tilt and vertical tilt of a grinding wheel;

FIG. 4 is a schematic of a wafer side of one of the prior art hydrostatic pads of FIG. 1;

FIG. 5A is a pictorial representation of nanotopology surface features of a semiconductor wafer ground using the wafer-clamping device of FIG. 1 and subsequently polished;

FIG. 5B is a graphical representation of the radial profile of the surface of the wafer of FIG. 5A;

FIG. 6 is a schematic side elevation of a grinder incorporating a wafer-clamping device of the present invention with hydrostatic pads shown in section;

FIG: 7 is an enlarged schematic side elevation of the wafer-clamping device thereof, including the hydrostatic pads and grinding wheels with a semiconductor wafer positioned therebetween;

FIG. 8 is a perspective of a left hydrostatic pad of the present invention, showing hydrostatic pocket configuration of a face of the pad that opposes the wafer during grinding operation;

FIG. 9A is a wafer-side elevation of the left hydrostatic pad of FIG. 8, showing a grinding wheel and the wafer in phantom to illustrate their positional relationships with the pad;

FIG. 9B is a bottom plan of the hydrostatic pad of FIG. 9A with the wafer again shown in phantom;

FIG. 10 is a wafer-side elevation similar to FIG. 9A showing channels connecting fluid injection ports within the hydrostatic pockets of the pad;

FIG. 11 is an enlarged fragmentary elevation of the hydrostatic pad of FIG. 9A illustrating location of hydrostatic pockets relative to a grinding wheel opening of the pad;

FIG. 12 is a perspective similar to FIG. 8 of a right hydrostatic pad, which opposes the left hydrostatic pad during grinding operation such that a wafer can be held between the two pads;

FIG. 13A is an elevation similar to FIG. 9A of the right hydrostatic pad;

FIG. 13B is a bottom plan thereof;

FIG. 14 is pictorial representation similar to FIG. 5A, but showing a semiconductor wafer ground using the wafer-clamping device of FIG. 6 and subsequently polished;

FIG. 15A is a pictorial representation of clamping stresses applied to a surface of a semiconductor wafer during grinding when the wafer is held by hydrostatic pads according to the invention;

FIG. 15B is a pictorial representation similar to FIG. 15A of clamping stresses on a wafer held by hydrostatic pads of the prior art;

FIG. 16 is a graph showing stresses in semiconductor wafers adjacent a periphery of the grinding wheels during grinding when the grinding wheels laterally shift, and comparing wafers held by hydrostatic pads according to the present invention to wafers held by hydrostatic pads of the prior art;

FIG. 17 is a graph similar to FIG. 16 comparing stresses in wafers resulting from lateral shift and vertical tilt of the grinding wheels;

FIG. 18 is a graph similar to FIG. 16 comparing stresses in wafers resulting from lateral shift in combination with horizontal tilt of the grinding wheels;

FIG. 19 is a graph similar to FIG. 16 comparing stresses in wafers resulting from the combined effect of lateral shift, vertical tilt, and horizontal tilt of the grinding wheels;

FIG. 20 is a graph comparing upper 0.05 percentile nanotopology values for wafers ground in a prior art wafer-clamping device to wafers ground in a wafer-clamping device of the invention; and

FIG. 21 is a schematic illustration of a hydrostatic pad according to a second embodiment of the invention, showing hydrostatic pocket configuration of a face of the pad opposing a semiconductor wafer during grinding.

Corresponding reference characters indicate corresponding parts throughout the several views of the drawings.

### DETAILED DESCRIPTION OF THE INVENTION

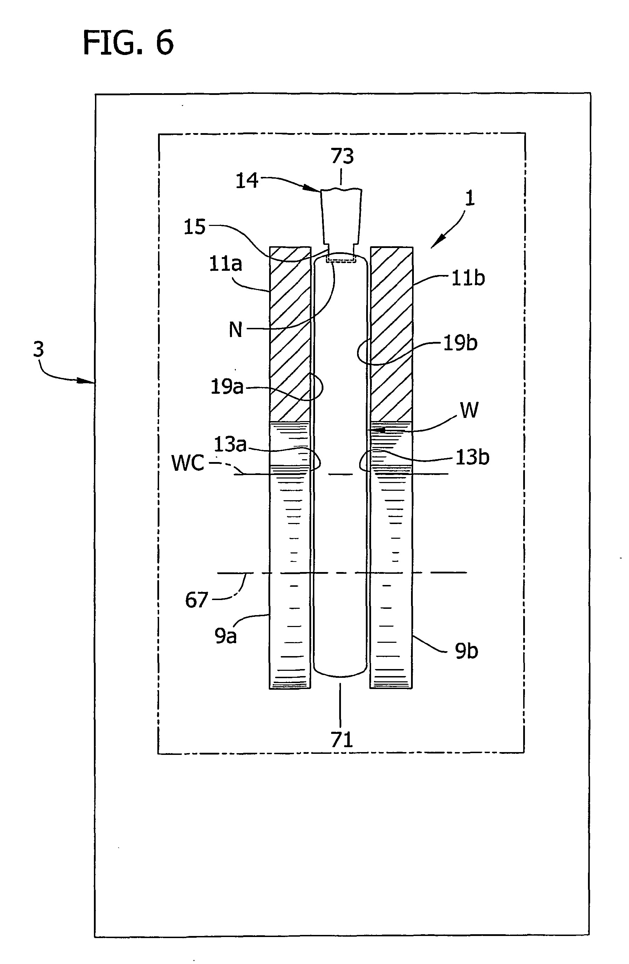

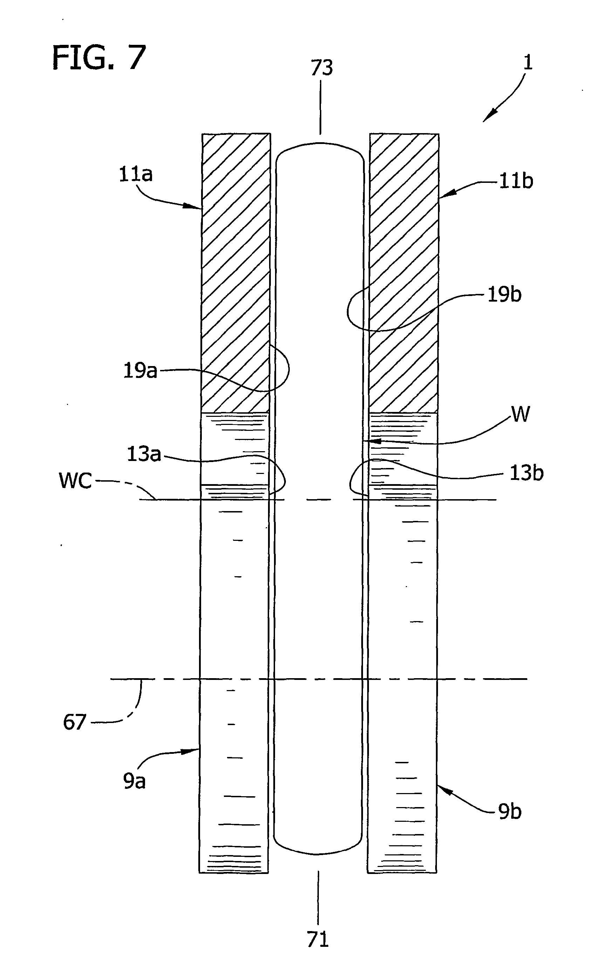

Referring again to the drawings, Figs. 6 and 7 schematically show a wafer-clamping device according to the invention, designated generally at reference numeral 1. The clamping device is capable of being used in a double side grinder, which is designated generally at reference numeral 3 in Fig. 6. An example of a double side grinder in which the wafer clamping device 1 may be used includes model DXSG320 and model DXSG300A manufactured by Koyo Machine Industries Co., Ltd. The wafer-clamping device 1 holds a single semiconductor wafer (broadly, "a workpiece"), designated generally at W in the drawings, in a vertical position within the grinder 3 so that both surfaces of the wafer can be uniformly ground at the same time. This improves flatness and parallelism of the wafer's surfaces prior to steps of polishing and circuitry printing. It is understood that a grinder may have a clamping device that holds workpieces other than semiconductor wafers without departing from the scope of the invention.

As also shown in Figs. 6 and 7, the wafer-clamping device 1 includes left and right grinding wheels, designated generally by reference numerals 9a and 9b, respectively, and left and right hydrostatic pads, designated by reference numerals 11a and 11b, respectively. The left and right designations are made for ease of description only and do not mandate any particular orientation of the wheels 9a and 9b and pads 11a and 11b. The letters "a" and "b" are used to distinguish parts of the left wheel 9a and left pad 11a from those of the right wheel 9b and right pad 11b. The grinding wheels 9a and 9b and hydrostatic pads 11a and 11b are mounted in the grinder 3 by means known to those of skill in the art.

As is also known in the art, the two grinding wheels 9a and 9b are substantially identical, and each wheel is generally flat. As seen in Figs. 6 and 7, the grinding wheels 9a and 9b are generally positioned for grinding engagement with the wafer W toward a lower center of the wafer. A periphery of each wheel 9a and 9b extends below the periphery of the wafer W at the bottom of the wafer, and extends above a central axis WC of the wafer at the wafer's center. This ensures the entire surface area of each wafer W is ground during operation. In addition, at least one of the grinding wheels 9a or 9b can move relative to its paired grinding wheel. This facilitates loading the semiconductor wafer W in position between the grinding wheels 9a and 9b in the clamping device 1 of the grinder 3. Also in the illustrated clamping device 1, the left hydrostatic pad 11a can move relative to the corresponding left grinding wheel 9a and can also move relative to the right hydrostatic pad 11b, which remains fixed, to further facilitate loading the semiconductor wafer W into the device 1. A wafer-clamping device in which both pads are movable relative to corresponding grinding wheels or in which both pads are fixed during wafer loading, or a wafer-clamping device in which a hydrostatic pad and corresponding grinding wheel move together during wafer loading do not depart from the scope of the invention.

still referring to the wafer-clamping device 1 shown in Figs. 6 and 7, during grinding operation, the two grinding wheels 9a and 9b and two hydrostatic pads 11a and 11b of the wafer-clamping device are arranged in opposed relation for holding the semiconductor wafer W therebetween. The grinding wheels 9a and 9b and hydrostatic pads 11a and 11b define vertical clamping planes 71 and 73, respectively, and produce clamping pressures on the wafer W that help hold the wafer in its vertical position. This will be described in more detail hereinafter.

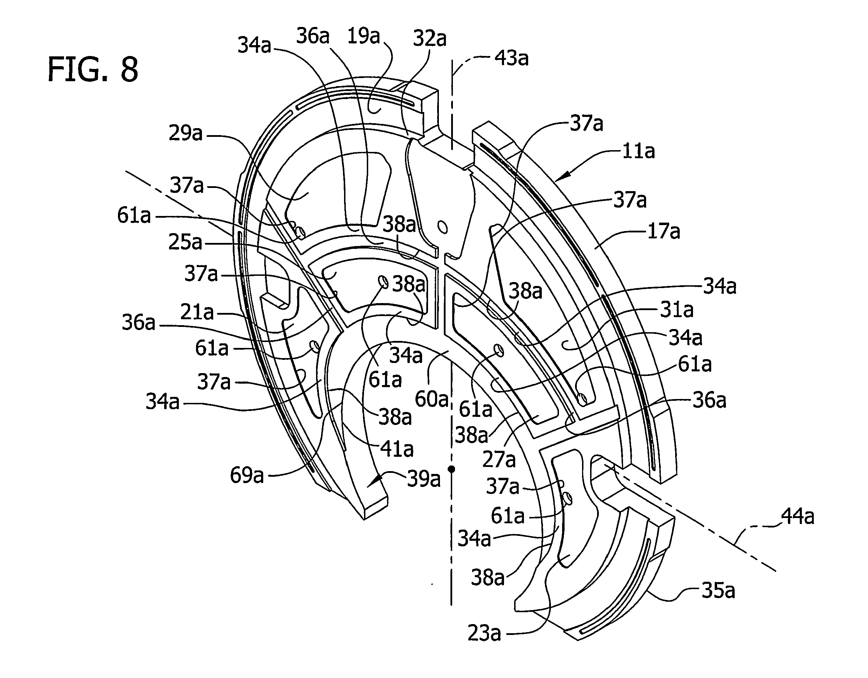

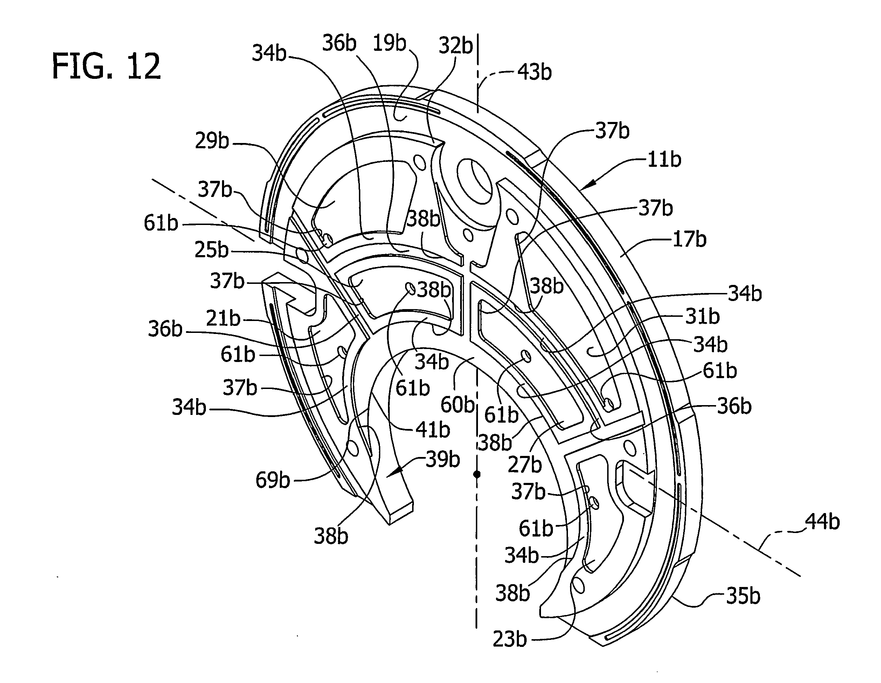

Referring particularly to Fig. 6, the hydrostatic pads 11a and 11b remain stationary during operation while a drive ring, designated generally by reference numeral 14, moves the wafer W in rotation relative to the pads and grinding wheels 9a and 9b. As is known in the art, a detent, or coupon 15, of the drive ring 14 engages the wafer W generally at a notch N (illustrated by broken lines in Fig. 6) formed in a periphery of the wafer to move the wafer in rotation about its central axis WC (central axis WC generally corresponds to horizontal axes 44a and 44b of pads 11a and 11b (see Figs. 8 and 12)). At the same time, the grinding wheels 9a and 9b engage the wafer W and rotate in opposite directions to one another. One of the wheels 9a and 9b rotates in the same direction as the wafer W and the other rotates in an opposite direction to the wafer.

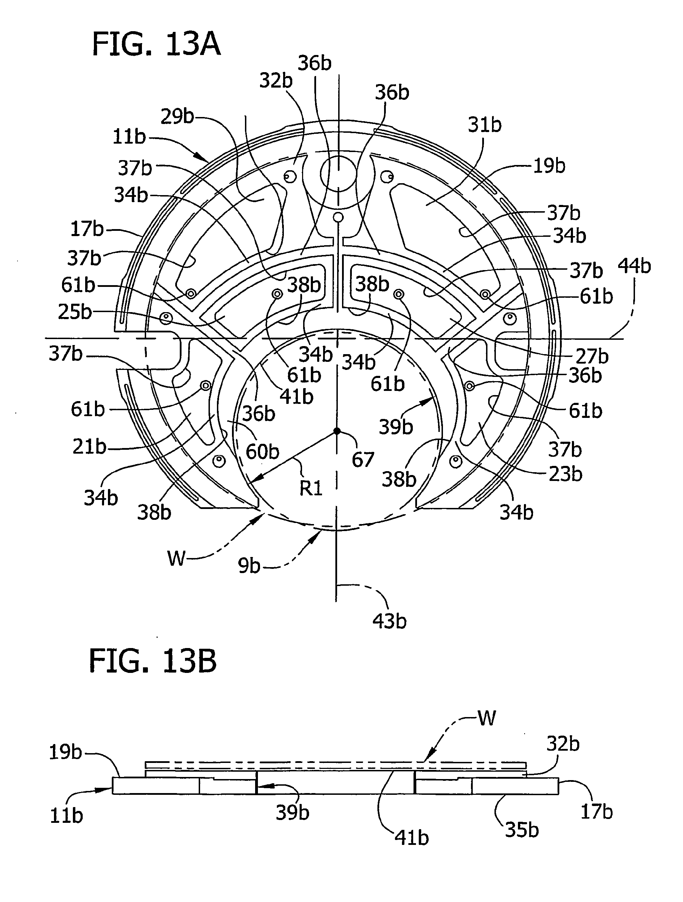

Referring now to Figs. 8-13B, the hydrostatic pads 11a and 11b of the invention are shown in greater detail. Figures 8-11 illustrate the left hydrostatic pad 11a, and Figs. 12-13B illustrate the opposing right hydrostatic pad 11b. As can be seen, the two pads 11a and 11b are substantially identical and are generally mirror images of each other. Therefore, only the left pad 11a will be described with it understood that a description of the right pad 11b is the same.

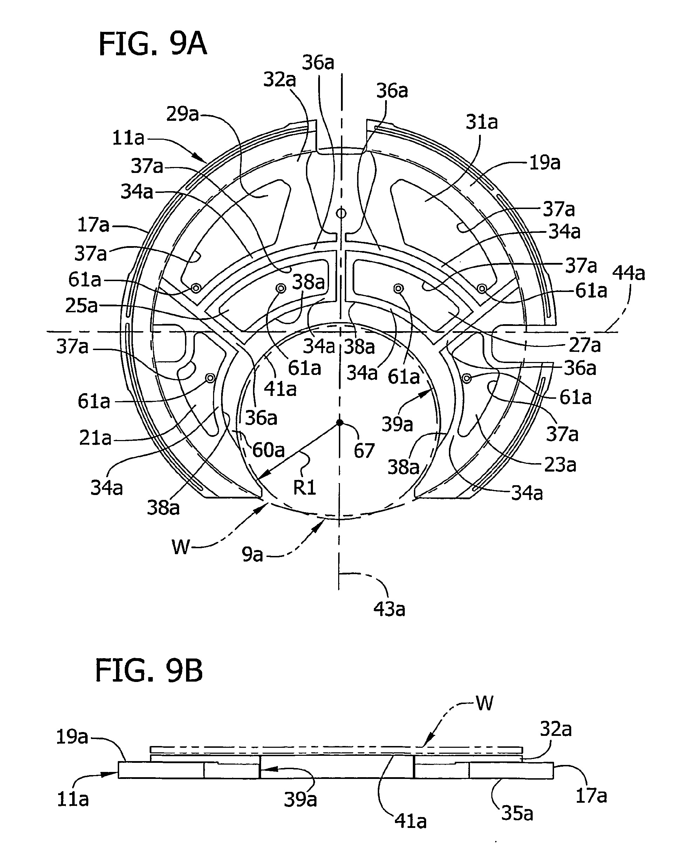

As shown in Figs. 8-9B, the left hydrostatic pad 11a is generally thin and circular in shape and has a size similar to the wafer W being processed. The wafer W is illustrated in phantom in Figs. 9A and 9B to show this relationship. The illustrated hydrostatic pad 11a has a diameter of about 36.5 cm (14.4 in) and a working surface area facing the wafer W during operation of about 900 cm² (139.5 in²). It is therefore capable of being used to grind standard wafers having diameters, for example, of about 300 mm. It should be understood, though, that a hydrostatic pad might have a different diameter and surface area without departing from the scope of the invention. For example, a pad may be sized on a reduced scale for use to grind a 200 mm wafer.

As best seen in Figs. 8 and 9A, a body 17a of the hydrostatic pad 11a includes a wafer side face 19a immediately opposite the wafer W during the grinding operation. Six hydrostatic pockets 21a, 23a, 25a, 27a, 29a and 31a formed in the wafer side face 19a are each positioned generally radially about a grinding wheel opening (indicated generally by reference numeral 39a) of the pad 11a. A back side 35a of the pad body 17a, opposite the wafer side face 19a, is generally flat and free of hydrostatic pockets, but could include pockets without departing from the scope of the invention. In addition, a hydrostatic pad with more or fewer than six hydrostatic pockets, for example, four pockets, does not depart from the scope of the invention.

The six hydrostatic pockets 21a, 23a, 25a, 27a, 29a, and 31a are each arcuate in shape and elongate in a generally circumferential direction around the pad 11a. Each pocket 21a, 23a, 25a, 27a, 29a, and 31a is recessed into a raised surface 32a of the wafer side face 19a, and each includes relatively flat vertical sidewalls 37a and rounded perimeter corners. The pockets are formed by cutting or casting shallow cavities into the face 19a of the pad 11a. Hydrostatic pockets formed by different processes do not depart from the scope of the invention.

Still referring to Figs. 8 and 9A, it can be seen that each of the pairs of pockets 21a and 23a, 25a and 27a, and 29a and 31a are substantially the same size and shape. Moreover, in the illustrated pad 11a, pockets 21a and 23a each have a surface area of about 14.38 cm² (2.23 in²); pockets 25a and 27a each have a surface area of about 27.22 cm² (4.22 in²); and pockets 29a and 31a each have a surface area of about 36.18 cm² (5.61 in²). A total pocket surface area of pad 11a is about 155.56 cm² (24.11 in²) and a ratio of total pocket surface area to the working surface area of the pad is about 0.17. This ratio can be other than 0.17 and still be within the scope of the present invention. For example, the ratio may be about 0.26 or less. By comparison in prior art pads 11' (Fig. 4), a surface area of each of pockets 21' and 23' is about 31.82 cm² (4.93 in²); a surface area of each of pockets 25' and 27' is about 36.47 cm² (5.65 in²); and a surface area of each of pockets 29' and 31' is about 47.89 cm² (7.42 in²). A total pocket surface area of the prior art pad 11' is about 232.36 cm² (36.02 in²), and a ratio of total pocket surface area to pad working surface area is about 0.26 (the working surface area for pad 11' is about 900 cm² (139.5 in²)).

Pockets 21a and 23a, 25a and 27a, and 29a and 31a, respectively, are also symmetrically located on opposite halves of the wafer side face 19a (as separated by vertical axis 43a of the pad 11a). Pockets 21a and 23a are generally below horizontal axis 44a of the pad 11a, while pockets 25a, 27a, 29a, and 31a are generally above axis 44a. Pockets 29a and 31a are generally above pockets 25a and 27a and are not located adjacent grinding wheel opening 39a, but are spaced away from the opening with pockets 25a and 27a located therebetween. In this pocket orientation, about 15% of the total pocket surface area is located below horizontal axis 44a. This percentage can be 23% or less without departing from the scope of the invention. By comparison in prior art pads 11', at least about 24% of the total pocket surface area is located below the pad's horizontal axis 44'. It should be understood that increased pocket area below axis 44' increases clamping force applied on the wafer by pad 11' toward the sides of grinding wheel opening 39' and contributes to B-ring formation.

Figures 8 and 9A show the circular grinding wheel opening 39a that is formed in a lower portion of the body 17a of the hydrostatic pad 11a and is sized and shaped for receiving grinding wheel 9a through the pad and into engagement with the lower center of the wafer W (the grinding wheel and wafer are illustrated in phantom in Fig. 9A). A center of opening 39a generally corresponds to rotational axis 67 of grinding wheel 9a (and 9b) when received in the opening. In the illustrated pad 11a, a radius R1 of grinding wheel opening 39a is about 87 mm (3.43 in) and a distance.between peripheral edges of the grinding wheel 9a and radially opposed edge 41a of the grinding wheel opening is relatively uniform and is generally on the order of about 5 mm (0.20 in). These distances can be different without departing from the scope of the invention.

As also shown, raised surface 32a of pad 11a comprises coextensive plateaus 34a extending around the perimeter of each pocket 21a, 23a, 25a, 27a, 29a, and 31a. Drain channels, each designated by reference numeral 36a, are formed in the raised surface 32a between each plateau 34a of the pockets 21a, 23a, 25a, 27a, 29a, and 31a. A roughly crescent shaped free region 60a is recessed into the raised surface between grinding wheel opening peripheral edge 41a and edges 38a of inner portions of plateaus 34a of pockets 21a, 23a, 25a, and 27a. Clamping force on the wafer W is effectively zero at free region 60a. These features will be further explained hereinafter.

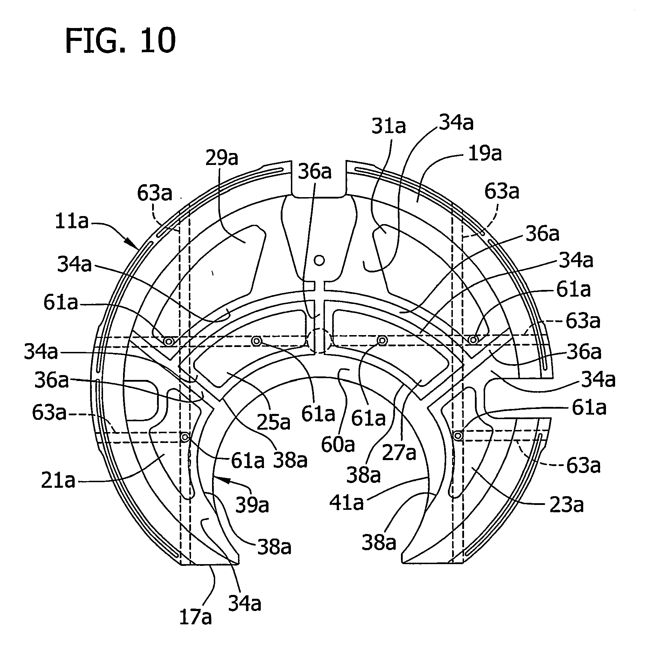

Referring now to Fig. 10, hydrostatic pockets 21a, 23a, 25a, 27a, 29a, and 31a each include a fluid injection port 61a for introducing fluid into the pockets. Channels 63a (illustrated by hidden lines) within the pad body 17a interconnect the fluid injection ports 61a and supply the fluid from an external fluid source (not shown) to the pockets. The fluid is forced into the pockets 21a, 23a, 25a, 27a, 29a, and 31a under relatively constant pressure during operation such that the fluid, and not the pad face 19a, contacts the wafer W during grinding. In this manner, the fluid at pockets 21a, 23a, 25a, 27a, 29a, and 31a holds the wafer W vertically within pad clamping plane 73 (see Figs. 6 and 7) but still provides a lubricated bearing area, or sliding barrier, that allows the wafer W to rotate relative to the pad 11a (and 11b) during grinding with very low frictional resistance. Clamping force of the pad 11a is provided primarily at pockets 21a, 23a, 25a, 27a, 29a, and 31a.

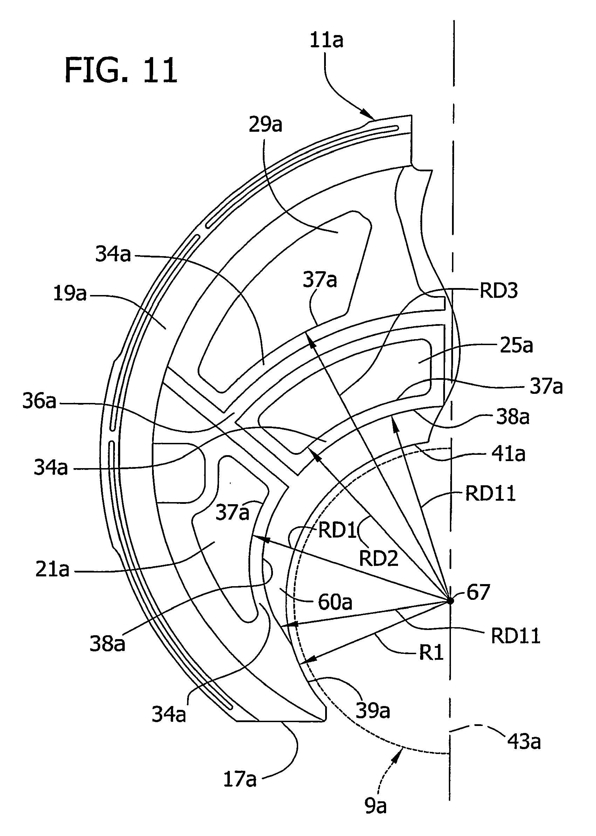

Figure 11 shows orientation of pockets 21a, 25a, and 29a in more detail with reference to a left half of the wafer side face 19a of pad 11a. Radial distances RD1, RD2, and RD3 indicate location of peripheral edges of the nearest vertical side wall 37a of pockets 21a, 25a, and 29a, respectively (the nearest vertical sidewall 37a refers to the vertical side wall closest to edge 41a of grinding wheel opening 39a) from the center of the grinding wheel opening, which ideally corresponds to grinding wheel rotational axis 67. As illustrated, distance RD1 is nonconstant around nearest vertical sidewall 37a of pocket 21a such that a bottom end of pocket 21a is further from opening 39a than a top end. Specifically, distance RD1 ranges from about 104 mm (4.1 in) toward the bottom end of the pocket to about 112 mm (4.4 in) toward the top end (these values are the same for pocket 23a). Radial distances RD2 and RD3 are relatively constant to nearest vertical walls 37a of pockets 25a and 29a, respectively, with RD2 having a value of about 113 mm (4.4 in) and RD3 having a value of about 165 mm (6.5 in) (these values are the same for pockets 27a and 31a, respectively). Radial distance RD1 may be constant and radial distances RD2 and RD3 may be nonconstant without departing from the scope of the invention.

Figure 11 also shows radial distance RD11 measured radially from grinding wheel rotational axis 67 to the radially innermost edge 38a of plateaus 34a of pockets 21a and 25a. The edge 38a defines the end, or boundary, of zero pressure (free) region 60a. As can be seen, radial distance RD11 is nonconstant to edge 38a, and in illustrated pad 11a ranges from about 108 mm (4.25 in) near vertical axis 43a to about 87 mm (3.43 in) near the bottom end of pocket 21a where edge 38a merges with grinding wheel opening edge 41a. These same measurements, when made from the peripheral edge of grinding wheel 9a (when received in opening 39a) to a radially opposed innermost portion of edge 38a, range from about 26 mm (1.02 in) near vertical axis 43a to about 5 mm (0.20 in) near the bottom end of pocket 21a and form ratios with radius R1 of grinding wheel opening 39a ranging from about 0.30 to about 0.057. By comparison, corresponding distances in the prior art hydrostatic pad 11' (Fig. 4) are constant because innermost peripheral edge 38' of the raised surface 32' coincides with grinding wheel opening edge 41' (i.e., there is no zero pressure (free) region in the prior art pad 11'). In this pad 11', radial distance RD11' is about 87 mm (3.43 in) and the same measurement from the peripheral edge of the grinding wheel 9' to edge 38' is about 5 mm (0.20 in).

Hydrostatic pads 11a and 11b of the invention have at least the following beneficial features as compared to prior art hydrostatic pads 11'. Total hydrostatic pocket surface area is reduced. This effectively reduces overall clamping force applied by the pads on the wafer W because the volume of fluid received into the hydrostatic pockets 21a, 23a, 25a, 27a, 29a, 31a, 21b, 23b, 25b, 27b, 29b, and 31b during operation is reduced. In addition, the pocket surface area below horizontal axis 44a is reduced. This specifically lowers clamping forces at the left and right sides of grinding wheel openings 39a and 39b. Furthermore, inner pockets 21a, 23a, 25a, 27a, 21b, 23b, 25b, and 27b are moved away from grinding wheel opening edges 41a and 41b with free regions 60a and 60b of zero pressure formed therebetween. This specifically lowers clamping forces around edges 41a and 41b of grinding wheel openings 39a and 39b.

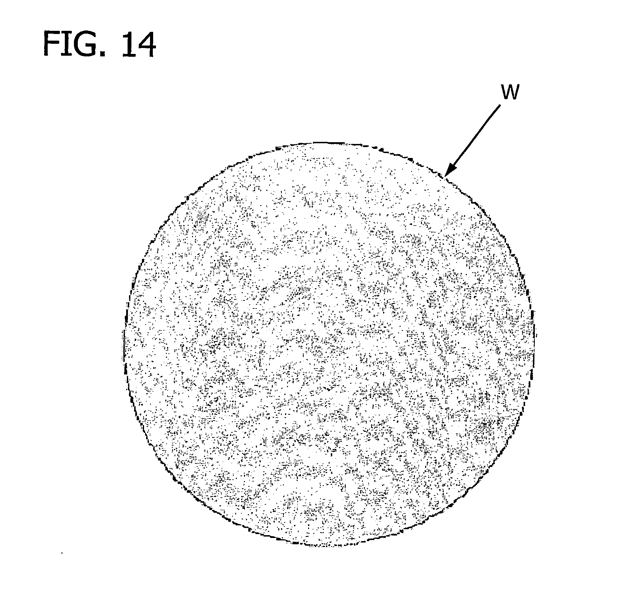

Wafers W are held less rigidly by hydrostatic pads 11a and 11b during grinding operation so that they can conform more easily to shift and/or tilt movements of grinding wheels 9a and 9b. This reduces the magnitude of hydrostatic clamping moments that form when grinding wheels 9a and 9b move (i.e., less stresses form in the bending region of the wafer). In addition, the wafer W is not tightly held adjacent grinding wheel opening edges 41a. The wafer W may still bend adjacent grinding wheel opening edge 41a when the wheels move, but not as sharply as in prior art grinding devices. Therefore, hydrostatic pads 11a and 11b promote more uniform grinding over the surfaces of wafers W, and nanotopology degradation, such as formation of B-rings and center-marks, of the ground wafers is reduced or eliminated. This can be seen by comparing Figs. 5A and 14. Figure 5A illustrates a wafer W ground using prior art hydrostatic pads 11' while Fig. 14 illustrates a wafer W ground using pads 11a and 11b of the invention. The wafer shown in Fig. 14 is substantially free of B-rings and center-marks.

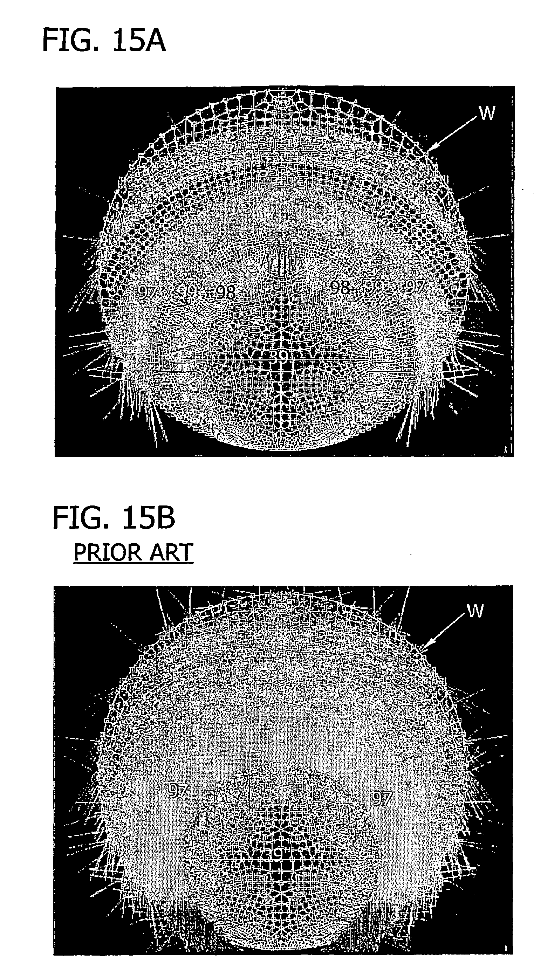

Figures 15A-19 illustrate the stresses in a wafer W held by pads 11a and 11b of the invention and by prior art pads 11'. Figures 15A and 15B visually illustrate these stresses when grinding wheel and hydrostatic pad clamping planes are aligned. In both wafers W, stress is negligible within grinding wheel openings 39 and 39' (the pad does not clamp the wafer in these regions). Figure 15A shows the lower stresses formed in wafer W when held by pads 11a and 11b. It particularly indicates lower stresses (light-color regions indicated at 98 and 99) over the entire surface of wafer W adjacent grinding wheel opening edges 41a and 41b. It also indicates more uniformly distributed stresses through the wafer. By contrast, and as shown in Fig. 15B, largest stresses 97 in wafer W held by pads 11' are in close proximity to peripheral edges of openings 39' (i.e., there is no zero pressure (free) region).

As can also be seen by comparing Figs. 15A and 15B, concentrated areas of large stress 97 are not as prevalent during grinding using the pads 11a and 11b as they are when using pads 11' (Fig. 15B). The advantage is both less localized deformation of the wafer W in the bending areas (e.g., adjacent grinding wheel opening edge 41a) and more uniform wear of the grinding wheels 9a and 9b. Uniform wheel wear ensures that the wheels do not change shape during grinding (i.e., no differential wheel wear). This also ensures that the grinder is able to maintain the lower nanotopology settings for longer periods of time. Also, if the wheels do shift or tilt, the stresses caused by the movement are effectively distributed through the wafer W with less pronounced formation of center-marks and B-rings. This desirably makes the grinding nanotopology less sensitive to shifts and tilts of the grinding wheels.

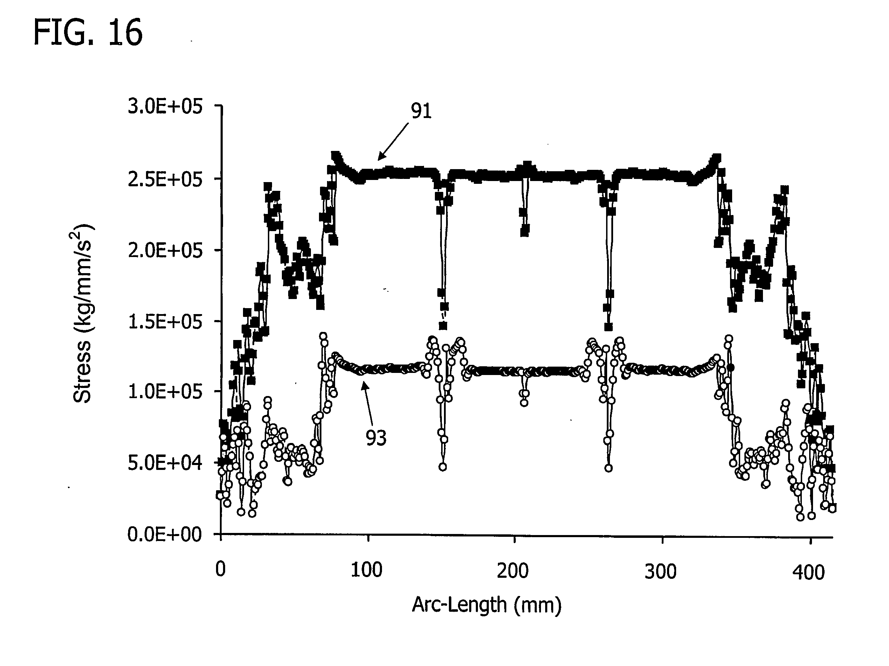

Figures 16-19 graphically illustrate lower stresses in wafer W during grinding operation using hydrostatic pads 11a and 11b when grinding wheels 9a and 9b shift and/or tilt. The illustrated stresses are those occurring in wafer W adjacent grinding wheel opening edges 41a and 41b and measured at.locations around edges 41a and 41b beginning at about a seven o'clock position (arc length of 0 mm) and moving clockwise around the perimeter edges (to arc length of about 400 mm). Stresses in wafers W held by prior art hydrostatic pads 11' are designated generally by reference numeral 91 and stresses in wafers held by pads 11a and 11b are designated generally by reference numeral 93.

Figure 16 illustrates the stresses 91 and 93 when the grinding wheels shift. As can be seen, stresses 93 are significantly less than stresses 91, and are more nearly constant around the entire periphery of grinding wheel openings 39a and 39b than stresses 91, including at the centers WC of the wafers W (corresponding to an arc length of about 200 mm). Accordingly, in the present invention, when the grinding wheels 9a and 9b shift, the wafers W do not bend as sharply near their centers as compared to wafers ground in prior art devices.

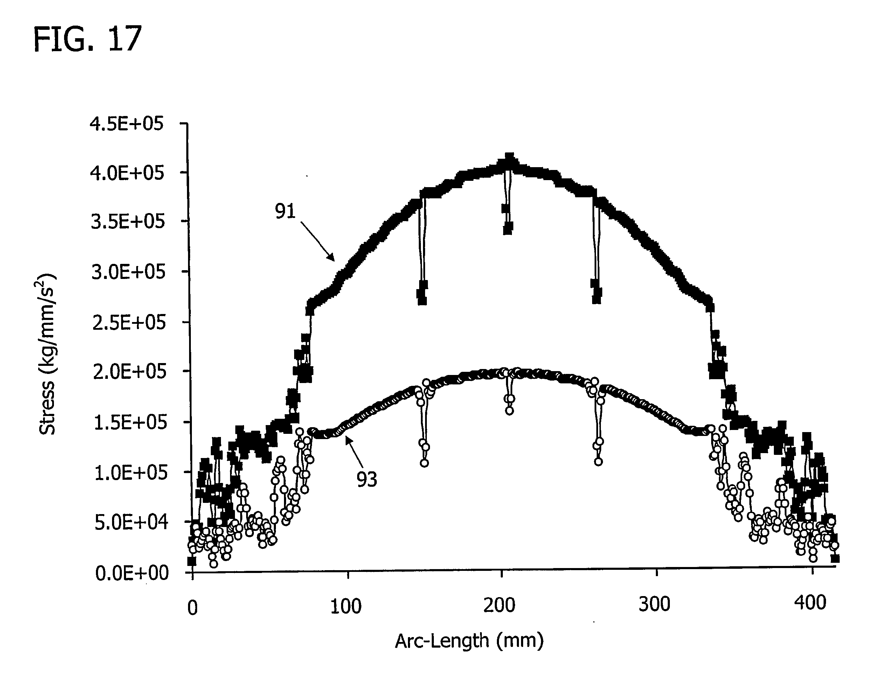

Figure 17 illustrates stresses 91 and 93 in wafers W when the grinding wheels shift and vertically tilt. Again, stresses 93 associated with pads 11a and 11b are generally constant along the entire periphery of the grinding wheel opening edges 39a and 39b. In addition, there is a markedly less increase in stress 93 in the wafers W held by pads 11a and 11b at locations corresponding to the wafer centers WC. Accordingly, when the grinding wheels 9a and 9b shift and vertically tilt, the wafers W do not bend as sharply adjacent the periphery of the grinding wheel openings 39a and 39b and center-mark formation is reduced.

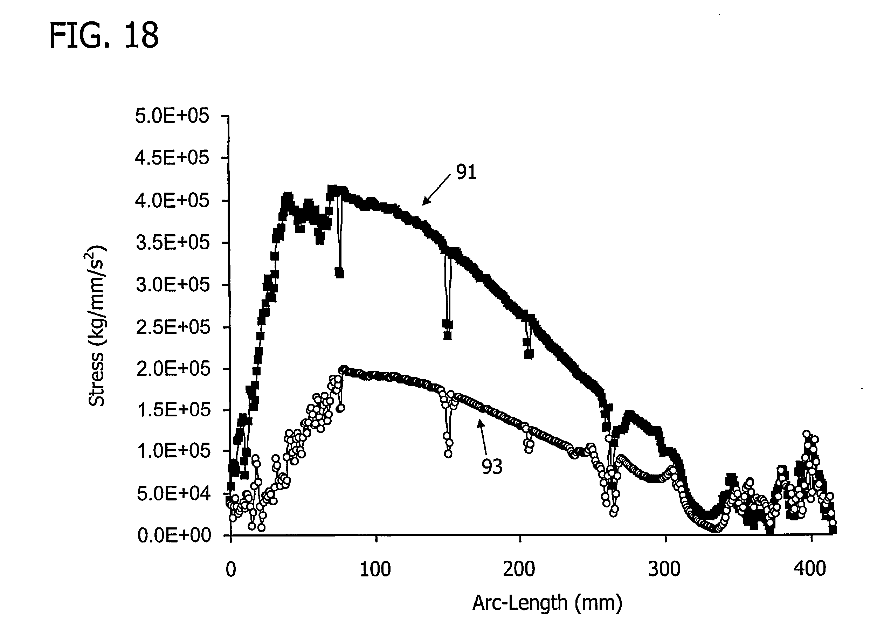

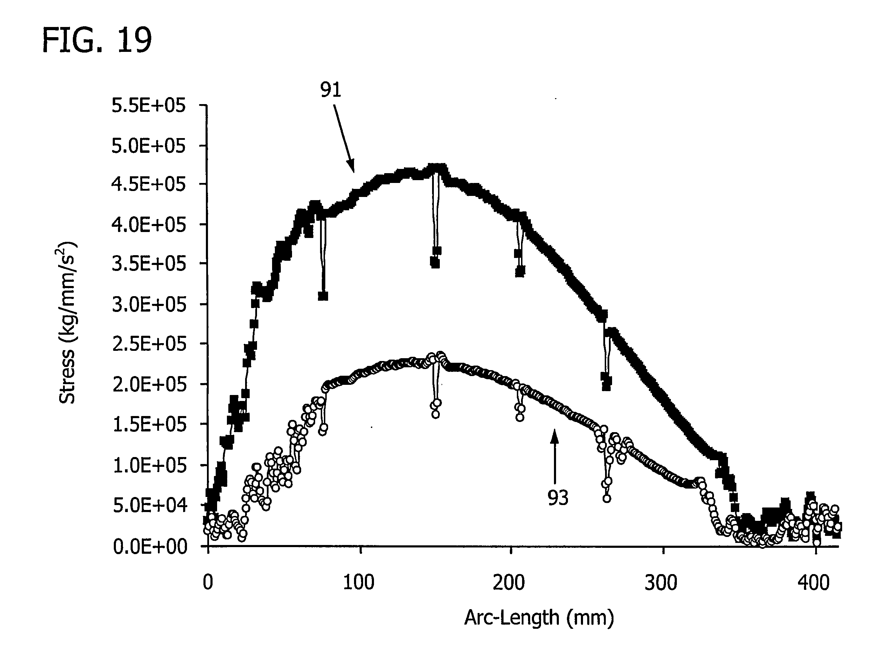

Figure 18 illustrates stresses 91 and 93 in wafers W when the wheels shift and horizontally tilt. As can be seen, stresses 93 at the left side of the wafers W do not increase as sharply as do stresses 91. Accordingly, wafers W held by pads 11a and 11b do not bend as sharply at their peripheries when wheels 9a and 9b shift and horizontally tilt and B-ring formation is reduced. Similar results are shown in Fig. 19 when stresses 91 and 93 in wafers W are caused by the combined effect of shift, vertical tilt, and horizontal tilt of grinding wheels.

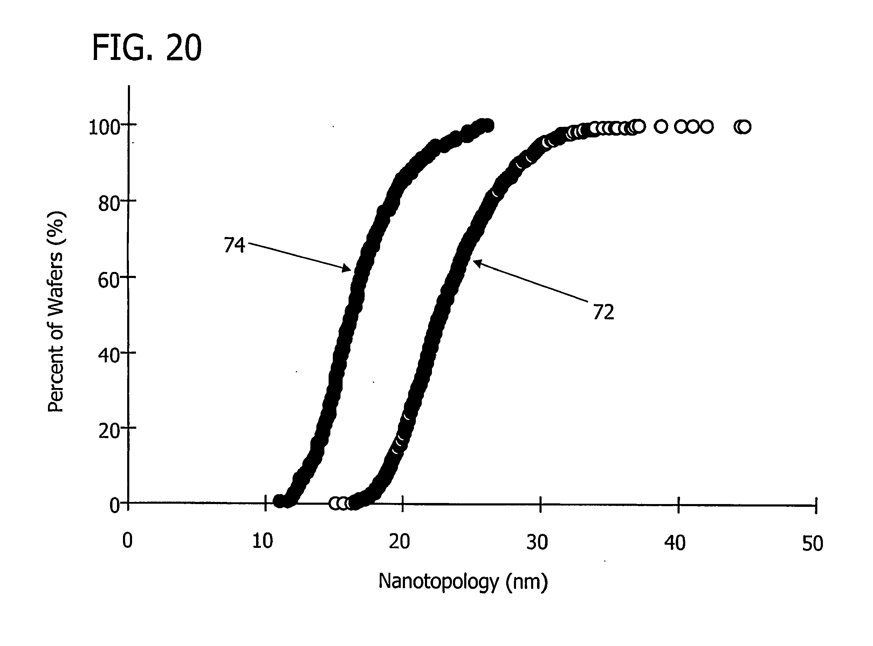

Figure 20 charts upper 0.05 percentile nanotopology values for wafers ground using hydrostatic pads 11' of the prior art and hydrostatic pads 11a and 11b of the invention. Nanotopology values for wafers ground using pads 11' are indicated generally by reference numeral 72, and values for wafers ground using pads 11a and 11b are indicated generally by reference numeral 74. The wafers ground using the pads 11a and 11b of the invention have consistently lower nanotopology values 74 than the values 72 of the prior art.

Hydrostatic pads 11a and 11b of the invention may be used to grind multiple wafers W in a set of wafers in a single operational set-up. A set of wafers may comprise, for example, at least 400 wafers. It may comprise greater than 400 wafers without departing from the scope of the invention. A single operational set-up is generally considered continual operation between manual adjustments of the grinding wheels 9a and 9b. Each ground wafer W of the set generally has improved nanotopology (e.g., reduced or eliminated center-mark and B-ring formation). In particular, they each have average peak to valley variations of less than about 12 nm. For example, the average peak to valley variations of the wafers may be about 8nm. Average peak to valley variations represent variations over an average radial scan of each wafer W. Peak to valley variations are determined around a circumference of the wafer W at multiple radii of the wafer, and an average of those values is taken to determine the average variation.

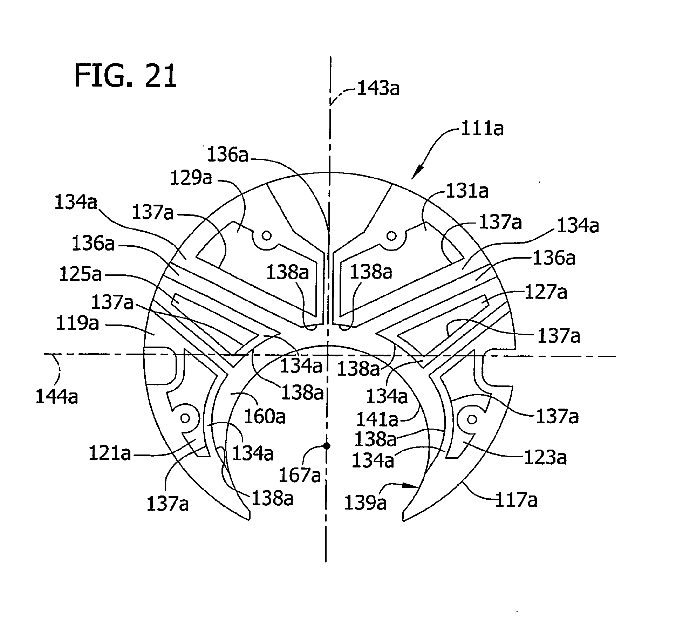

Figure 21 schematically illustrates a left hydrostatic pad according to a second embodiment of invention. The pad is designated generally by reference numeral 111a, and parts of this pad corresponding to parts of the pad 11a of the first embodiment are designated by the same reference numerals, plus "100". This hydrostatic pad 111a is substantially the same as the previously described hydrostatic pad 11a, but has hydrostatic pockets 121a, 123a, 125a, 127a, 129a, and 131a shaped and oriented differently than corresponding pockets 21a, 23a, 25a, 27a, 29a, and 31a in the pad 11a. Similar to pad 11a, the pockets 121a, 123a, 125a, 127a, 129a, and 131a are radially positioned about the grinding wheel opening 139a of the pad 111a, with pockets 121a and 123a, pockets 125a and 127a, and pockets 129a and 131a being similar and symmetrically located on opposite halves of the wafer side face 119a. Additionally, pockets 121a and 123a are elongated in a circumferential direction around the pad 111a. In this pad 111a, however, pockets 125a, 127a, 129a, and 131a are elongated radially away from the grinding wheel opening 139a. These pads 111a and 111b are the same as pads 11a and 11b in all other aspects.

It is additionally contemplated that a center of clamping of hydrostatic pads could be affected by controlling the pressure of the water applied to pockets of the hydrostatic pads. This would lower the center of clamping, moving it closer to a rotational axis of grinding wheels of a wafer-clamping device. More specifically, the fluid pressure in each pocket (or some subset of pockets) could be changed during the course of grinding and/or controlled independently of the other pocket(s). One way of varying the pressure among the several pockets is by making the sizes of the orifices opening into the pockets different. Moreover, the stiffness of the region associated with each pocket can be varied among the pockets by making the depth of the pockets different. Deeper pockets will result in a more compliant hold on the wafer W in the region of the deeper pocket than shallower pockets, which will hold the wafer stiffly in the region of the shallower pocket.

The hydrostatic pads 11a, 11b, 111a, and 111b illustrated and described herein have been described for use with a wafer W having a diameter of about 300 mm. As previously stated, a hydrostatic pad may be sized on a reduced scale for use to grind a 200 mm wafer without departing from the scope of the invention. This applies to each of the hydrostatic pad dimensions described herein.

The hydrostatic pads 11a and 11b of the invention are made of a suitable rigid material, such as metal, capable of supporting the wafer W during grinding operation and of withstanding repeated grinding use. Hydrostatic pads made of other, similarly rigid material do not depart from the scope of the invention.

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements.

As various changes could be made in the above without departing from the scope of the invention as defined by the appended claims, it is intended that all matter contained in the above description and shown in the accompanying drawings shall be interpreted as illustrative and not in a limiting sense.

## Claims

1. A hydrostatic pad (11 a, 11 b) for use in holding a workpiece during grinding of the workpiece by grinding wheels (9a, 9b), the hydrostatic pad (11 a, 11b) comprising:
a body (17a) for holding the workpiece during grinding, the body (17a) having a working surface area and a horizontal axis (44a);
an opening (39a) formed in the body (17a) for receiving a first grinding wheel (9a, 9b) therethrough into engagement with the workpiece;
at least one pocket (21a, 23a, 25a, 27a, 29a, 31a) formed in the body (17a) and being adapted for receiving fluid through the body (17a) into the pocket (21 a, 23a, 25a, 27a, 29a, 31 a) for providing a barrier between the body (17a) and the workpiece and for applying pressure to the workpiece during grinding, a total pocket surface area of all pockets (21a, 23a, 25a, 27a, 29a, 31a) in the body (17a) being less than said working surface area of the body (17a) such that a ratio of the pocket surface area to the working surface area is less than 0.26; and
a free region (60a) recessed in the body (17a) between the peripheral edge of said opening and the radially opposed one pocket, the pad (11a, 11b) applying substantially no clamping pressure to the workpiece at the edge of the one pocket (21a, 23a, 25a, 27a, 29a, 31a), said edge being spaced apart from the peripheral edge of the opening in the body (17a) such that the free region is therebetween.

2. A hydrostatic pad (11a, 11b) as set forth in claim 1 wherein the ratio of said pocket surface area to said working surface area is 0.17.

3. A hydrostatic pad (11a, 11b) as set forth in claim 1 wherein said pocket surface area is less than 225 cm² (34.87 in²).

4. A hydrostatic pad (11a, 11b) as set forth in claim 1 wherein 20% or less of said pocket surface area is formed below the horizontal axis (44a) of the body (17a).

5. A hydrostatic pad (11a, 11b) as set forth in claim 1 comprising multiple pockets (21a, 23a, 25a, 27a, 29a, 31a) and further comprising drain channels (36a) between at least some of the pockets for removing excess fluid from the pockets, each pocket comprising an injection port (61a) for introducing fluid from the body (17a) into the respective pocket.

6. A hydrostatic pad (11a, 11b) as set forth in claim 5 wherein the opening (39a) in the body (17a) has a center generally corresponding to the axis of rotation of the grinding wheel (9a, 9b) when received in the opening (39a), the hydrostatic pockets (21a, 23a, 25a, 27a, 29a, 31a) being arranged in radially opposed relation to portions of said peripheral edge and being located a radial distance from the center of said opening (39a).

7. A hydrostatic pad (11a, 11b) as set forth in claim 6 wherein the opening (39a) in the body (17a) is formed adjacent a peripheral edge of the body (17a).

8. A hydrostatic pad (11a, 11b) as set forth in claim 1 in combination with a grinding machine including a first grinding wheel (9a, 9b) received into the opening (39a) of the hydrostatic pad body (17a), a second hydrostatic pad (11a, 11b), a second grinding wheel (9a, 9b) received into an opening (39a) of a body (17a) of said second hydrostatic pad (11a, 11b), wherein the two hydrostatic pads (11a, 11b) and two grinding wheels (9a, 9b) are arranged in opposed relation to each other for holding the workpiece therebetween and providing simultaneous double side grinding of the workpiece.

9. A hydrostatic pad (11a, 11b) as set forth in claim 1 wherein the opening (39a) has a peripheral edge defined by the body (17a) and further having a center;
the at least one pocket (21 a, 23a, 25a, 27a, 29a, 31a) being arranged in radially opposed relation to a portion of the peripheral edge of said opening (39a) at a radial distance from the center of said opening (39a); and
a free region formed in the body (17a) between the peripheral edge of said opening (39a) and the radially opposed one pocket, the free region being constructed so that the hydrostatic pad (11a, 11b) applies substantially no clamping pressure to the workpiece at the free region when in use.

10. A hydrostatic pad (11a, 11b) as set forth in claim 9 wherein radial distances from the center of the opening (39a) in the pad (11a, 11b) to different portions of the edge of the one pocket are nonuniform along said edge.

11. A hydrostatic pad (11a, 11b) as set forth in claim 10 wherein at least one measure of said radial distances is at least 1.1 times a radius of the opening (39a) in the body (17a).

12. A hydrostatic pad (11a, 11b) as set forth in claim 9 wherein a spacing between a peripheral edge of the grinding wheel (9a, 9b) when received in the opening (39a) in the pad (11a, 11b) and a radially opposed portion of the pocket edge is nonuniform along said pocket edge and wherein at least one measure of said spacing is at least 0.1 times a radius of the opening (39a) in the body (17a).

13. A hydrostatic pad (11a, 11b) as set forth in claim 9 comprising plural pockets (21a, 23a, 25a, 27a, 29a, 31a) arranged in radially opposed relation to the opening (39a) of the body (17a) and wherein said free region is formed between the peripheral edge of said opening (39a) and at least one of the radially opposed pockets (21a, 23a, 25a, 27a, 29a, 31a).

14. A hydrostatic pad (11a, 11b) as set forth in claim 9 further comprising a second body (17a) and a second grinding wheel (9a, 9b) received into an opening (39a) of the second body (17a), the two bodies and two grinding wheels (9a, 9b) being arranged in opposed relation to each other for holding the workpiece therebetween and providing simultaneous double side grinding of the workpiece.

15. A double side grinding process for obtaining a set of semiconductor wafers (w) formed by a single set-up of a double side grinder, wherein the set of wafers (w) is obtained from an apparatus using the hydrostatic pad (11a, 11b) of Claim 1, each wafer having an improved nanotopology with average peak to valley variations of 12 nm or less and each wafer (w) being formed by:
positioning the wafer (w) between a first and second hydrostatic pad (11a, 11b) and between a first and second grinding wheel (9a, 9b) located within an opening (39a) of each of the first hydrostatic pad 11a, 11b) and second hydrostatic pad (11a, 11b); and
holding the wafer (w) between said hydrostatic pads 11a, 11b) and between said grinding wheels (9a, 9b) so that no appreciable clamping pressure is applied to the held wafer (w) adjacent peripheral edges of the grinding wheels (9a, 9b) and adjacent peripheral edges of the openings in the pads (11a, 11b).

16. A double side grinding process as set forth in claim 15 for obtaining a set of semiconductor wafers (w) wherein the set comprises at least 400 consecutively produced wafers having said improved nanotopology and formed by said single setup.

17. A double side grinding process as set forth in claim 16 for obtaining a set of semiconductor wafers (w) wherein the set comprises at least 800 wafers.

18. A double side grinding process as set forth in claim 16 for obtaining a set of semiconductor wafers (w) wherein each of the wafers in the set are substantially free of center-marks and B-rings.

19. A double side grinding process as set forth in claim 16 for obtaining a set of semiconductor wafers (w) wherein each wafer has an improved nanotopology with average peak to valley variations of about 8 nm or less.

## Patentansprüche

1. Ein hydrostatisches Kissen (11a, 11b) zur Befestigung eines Werkstücks während des Schleifens dieses Werkstücks durch Schleifscheiben (9a, 9b), wobei das hydrostatische Kissen (11a, 11b) umfasst:
ein Gehäuse (17a) zur Befestigung des Werkstücks während des Schleifens, wobei das Gehäuse (17a) eine Arbeitsoberfläche und eine horizontale Achse (44a) hat;
eine Öffnung (39a) im Gehäuse (17a) zur Aufnahme einer ersten Schleifscheibe (9a, 9b), welche hierdurch in Kontakt mit dem Werkstück kommt;
wenigstens eine Tasche (21a, 23a, 25a, 27a, 29a, 31a) im Gehäuse (17a) zur Aufnahme von Flüssigkeit durch das Gehäuse (17a) hindurch in die Tasche (21a, 23a, 25a, 27a, 29a, 31a), so dass eine Barriere zwischen dem Gehäuse (17a) und dem Werkstück entsteht und während des Schleifens Druck auf das Werkstück ausgeübt wird, wobei die Gesamttaschenfläche aller Taschen (21a, 23a, 25a, 27a, 29a, 31a) im Gehäuse (17a) weniger beträgt als die der Arbeitsoberfläche des Gehäuses (17a), so dass das Verhältnis der Taschenoberfläche zur Arbeitsoberfläche weniger als 0,26 beträgt; und
einen freien, versenkten Bereich im Gehäuse (17a) zwischen der Außenkante dieser Öffnung und der radial gegenüberliegenden einen Tasche, wobei das Kissen (11a, 11b) an der Kante der einen Tasche (21a, 23a, 25a, 27a, 29a, 31a) im wesentlichen keinen Anpressdruck auf das Werkstück ausübt, wobei diese Kante so weit von der Außenkante der Öffnung im Gehäuse (17a) entfernt ist, dass sich der freie Bereich dazwischen befindet.

2. Ein hydrostatisches Kissen (11a, 11b) gemäß Anspruch 1, wobei das Verhältnis der Taschenoberfläche zur Arbeitsoberfläche 0,17 beträgt.

3. Ein hydrostatisches Kissen (11a, 11b) gemäß Anspruch 1, wobei die Taschenoberfläche weniger als 225 cm² (34.87 in²) beträgt.

4. Ein hydrostatisches Kissen (11a, 11b) gemäß Anspruch 1, wobei 20 % oder weniger der Taschenoberfläche sich unterhalb der horizontalen Achse (44a) des Gehäuses (17a) befindet.

5. Ein hydrostatisches Kissen (11a, 11b) gemäß Anspruch 1, umfassend mehrere Taschen (21a, 23a, 25a, 27a, 29a, 31a), und des weiteren umfassend Drainagekanäle (36a) zwischen wenigstens einigen dieser Taschen zur Entfernung von überschüssiger Flüssigkeit aus den Taschen, wobei jede Tasche einen Injektionsanschluss (61a) zum Einfüllen von Flüssigkeit aus dem Gehäuse (17a) in die jeweilige Tasche umfasst.

6. Ein hydrostatisches Kissen (11a, 11b) gemäß Anspruch 5, wobei die Öffnung (39a) im Gehäuse (17a) einen Mittelpunkt hat, der im wesentlichen der Rotationsachse der Schleifscheibe (9a, 9b) entspricht, sobald sich diese in der Öffnung (39a) befindet, und wobei die hydrostatischen Taschen (21a, 23a, 25a, 27a, 29a, 31a) radial gegenüberliegend bezogen auf Abschnitte der Außenkante angeordnet sind und sich in einem radialen Abstand vom Mittelpunkt dieser Öffnung (39a) befinden.

7. Ein hydrostatisches Kissen (11a, 11b) gemäß Anspruch 6, wobei die Öffnung (39a) im Gehäuse (17a) sich neben einer Außenkante des Gehäuses (17a) befindet.

8. Ein hydrostatisches Kissen (11a, 11b) gemäß Anspruch 1 in Kombination mit einer Schleifmaschine umfassend eine erste Schleifscheibe (9a, 9b), welche durch die Öffnung (39a) im Gehäuse (17a) des hydrostatischen Kissens aufgenommen wird, ein zweites hydrostatisches Kissen (11a, 11b), eine zweite Schleifscheibe (9a, 9b), welche durch eine Öffnung (39a) im Gehäuse (17a) dieses zweiten hydrostatischen Kissens (11a, 11b) aufgenommen wird, wobei die beiden hydrostatischen Kissen (11a, 11b) und die beiden Schleifscheiben (9a, 9b) einander gegenüberliegend angeordnet sind, so dass sie das Werkstück zwischeneinander festhalten und ein gleichzeitiges beidseitiges Schleifen des Werkstücks erlauben.

9. Ein hydrostatisches Kissen (11a, 11b) gemäß Anspruch 1, wobei die Öffnung (39a) eine Außenkante besitzt, die durch das Gehäuse (17a) definiert wird, und des weiteren einen Mittelpunkt hat;
wobei die wenigstens eine Tasche (21a, 23a, 25a, 27a, 29a, 31a) radial gegenüber einem Abschnitt der Außenkante dieser Öffnung (39a) angeordnet ist, in einem radialen Abstand vom Mittelpunkt dieser Öffnung (39a); und
wobei ein freier Bereich sich im Gehäuse (17a) zwischen der Außenkante dieser Öffnung (39a) und der radial gegenüberliegenden einen Tasche befindet, wobei dieser freie Bereich so konstruiert ist, dass das hydrostatische Kissen (11a, 11b) während seiner Benutzung im freien Bereich im wesentlichen keinen Anpressdruck auf das Werkstück ausübt.

10. Ein hydrostatisches Kissen (11a, 11b) gemäß Anspruch 9, wobei die radialen Abstände vom Mittelpunkt der Öffnung (39a) im Kissen (11a, 11b) zu verschiedenen Abständen der Kante der einen Tasche nicht einheitlich entlang dieser Kante sind.

11. Ein hydrostatisches Kissen (11a, 11b) gemäß Anspruch 10, wobei wenigstens eine Länge dieser radialen Abstände wenigstens 1,1 mal der Radius der Öffnung (39a) im Gehäuse (17a) ist.

12. Ein hydrostatisches Kissen (11a, 11b) gemäß Anspruch 9, wobei ein Abstand zwischen einer Außenkante der Schleifscheibe (9a, 9b) nach deren Aufnahme in die Öffnung (39a) im Kissen (11a, 11b) und einem radial gegenüberliegenden Abschnitt der Taschenkante entlang dieser Taschenkante nicht einheitlich ist, und wobei wenigstens eine Länge dieses Abstandes wenigstens 0,1 mal der Radius der Öffnung (39a) im Gehäuse (17a) ist.

13. Ein hydrostatisches Kissen (11a, 11b) gemäß Anspruch 9, umfassend mehrere Taschen (21a, 23a, 25a, 27a, 29a, 31a), die in radial gegenüberliegender Position bezogen auf die Öffnung (39a) des Gehäuses (17a) angeordnet sind, und wobei der freie Bereich sich zwischen der Außenkante dieser Öffnung (39a) und wenigstens einer der radial gegenüberliegenden Taschen (21a, 23a, 25a, 27a, 29a, 31a), befindet.

14. Ein hydrostatisches Kissen (11a, 11b) gemäß Anspruch 9, des weiteren umfassend ein zweites Gehäuse (17a) und eine zweite Schleifscheibe (9a, 9b), welche in einer Öffnung (39a) des zweiten Gehäuses (17a) aufgenommen wird, wobei die beiden Gehäuse und die beiden Schleifscheiben (9a, 9b) einander gegenüberliegend angeordnet sind, so dass sie das Werkstück zwischeneinander halten und ein gleichzeitiges doppelseitiges Schleifen des Werkstücks erlauben.

15. Ein doppelseitiger Schleifprozess zur Herstellung eines Sets von HalbleiterWafern (w) produziert von einem einzelnen doppelseitigen Schleifsystem, wobei das Set von Wafern (w) durch eine Vorrichtung mit dem hydrostatischen Kissen (11a, 11b) gemäß Anspruch 1 hergestellt wird, wobei jeder Wafer eine verbesserte Nanotopologie mit Durchschnitts-Peak to Valley-Variationen von 12 nm oder weniger hat, und jeder Wafer (w) hergestellt wird durch:
Positionierung des Wafers (w) zwischen einem ersten und zweiten hydrostatischen Kissen (11a, 11b) und zwischen einer ersten und zweiten Schleifscheibe (9a, 9b) welche in einer Öffnung (39a) von jedem des ersten hydrostatischen Kissens (11a, 11b) und zweiten hydrostatischen Kissens (11a, 11b) angeordnet ist; und
Befestigung des Wafers (w) zwischen diesen hydrostatischen Kissen (11a, 11b) und zwischen diesen Schleifscheiben (9a, 9b), so dass kein nennenswerter Anpressdruck auf den festgehaltenen Wafer (w) nahe den Außenkanten der Schleifscheiben (9a, 9b) und nahe den Außenkanten der Öffnungen in den Kissen (11a, 11b) ausgeübt wird.

16. Ein doppelseitiger Schleifprozess gemäß Anspruch 15 zur Herstellung eines Sets von Halbleiterwafern (w), wobei das Set wenigstens 400 nacheinander hergestellte Wafers umfasst, welche diese verbesserte Nanotopologie haben und mit diesem einzelnen System hergestellt werden.

17. Ein doppelseitiger Schleifprozess gemäß Anspruch 16 zur Herstellung eines Sets von Halbleiterwafern (w), wobei das Set wenigstens 800 Wafer umfasst.

18. Ein doppelseitiger Schleifprozess gemäß Anspruch 16 zur Herstellung eines Sets von Halbleiterwafern (w), wobei jeder der Wafer im Set im wesentlichen frei von Ankömungen und B-Ringen ist.

19. Ein doppelseitiger Schleifprozess gemäß Anspruch 16 zur Herstellung eines Sets von Halbleiterwafern (w), wobei jeder Wafer eine verbesserte Nanotopologie mit Durchschnitts-Peak to Valley-Variationen von etwa 8 nm oder weniger hat.

## Revendications

1. Patin hydrostatique (11a, 11b) pour une utilisation dans la tenue d'une pièce à usiner pendant le meulage de la pièce à usiner par des meules (9a, 9b), le patin hydrostatique comprenant :
un corps (17a) pour tenir la pièce à usiner pendant le meulage, le corps (17a) ayant une surface de travail et un axe horizontal (44a),
une ouverture (39a) formée dans le corps (17a) pour recevoir une première meule (9a, 9b) à travers elle en prise avec la pièce à usiner,
au moins une poche (21a, 23a, 25a, 27a, 29a, 31a) formée dans le corps (17a) et étant adaptée pour recevoir un fluide à travers le corps (17a) dans la poche (21a, 23a, 25a, 27a, 29a, 31a) pour fournir une barrière entre le corps (17a) et la pièce à usiner et pour appliquer une pression à la pièce à usiner pendant le meulage, une superficie totale de poche de l'ensemble des poches (21a, 23a, 25a, 27a, 29a, 31a) dans le corps (17a) étant inférieure à ladite superficie de travail du corps (17a) de telle sorte qu'un rapport de la superficie de poche sur la superficie de travail est inférieur à environ 0,26, et
une région libre (60a) en cavité dans le corps (17a) entre le bord périphérique de ladite ouverture et la poche radialement opposée, le patin (11a, 11b) n'appliquant sensiblement pas de pression de serrage à la pièce à usiner au niveau du bord de la poche (21a, 23a, 25a, 27a, 29a, 31a), ledit bord étant espacé du bord périphérique de l'ouverture dans le corps (17a) de sorte que la région libre est positionnée entre eux.

2. Patin hydrostatique (11a, 11b) selon la revendication 1, dans lequel le rapport de ladite superficie de la poche sur ladite superficie de travail est 0,17.

3. Patin hydrostatique (11a, 11b) selon la revendication 1, dans lequel ladite superficie de la poche est inférieure à 225 cm² (34,87 pouces²).

4. Patin hydrostatique (11a, 11b) selon la revendication 1, dans lequel 20% ou moins de ladite superficie de la poche est formée en dessous de l'axe horizontal (44a) du corps (17a).

5. Patin hydrostatique (11a, 11b) selon la revendication 1, comprenant plusieurs poches (21a, 23a, 25a, 27a, 29a, 31a) et comprenant en outre des canaux d'écoulement (36a) entre au moins certaines des poches pour enlever l'excès de liquide dans les poches, chaque poche comprenant un orifice d'injection (61a) pour introduire un fluide à partir du corps (17a) dans la poche respective.

6. Patin hydrostatique (11a, 11b) selon la revendication 5, dans lequel l'ouverture (39a) dans le corps (17a) présente un centre correspondant généralement à l'axe de rotation de la meule (9a, 9b) lorsqu'elle est reçue dans l'ouverture (39a), les poches hydrostatiques (21a, 23a, 25a, 27a, 29a, 31a) étant disposées en relation radialement opposée à des parties dudit bord périphérique et étant situées à une distance radiale du centre de ladite ouverture (39a).

7. Patin hydrostatique (11a, 11b) selon la revendication 6, dans lequel l'ouverture (39a) dans le corps (17a) est formée à proximité adjacente d'un bord périphérique du corps (17a).

8. Patin hydrostatique (11a, 11b) selon la revendication 1, en combinaison avec une machine de meulage comprenant une première meule (9a, 9b) reçue dans l'ouverture (39a) du corps de patin hydrostatique (17a), un second patin hydrostatique (11a, 11b), une seconde meule (9a, 9b) reçue dans une ouverture (39a) d'un corps (17a) dudit second patin hydrostatique (11a, 11b), dans lequel les deux patins hydrostatiques (11a, 11b) et les deux meules (9a, 9b) sont disposés en relation mutuellement opposée pour maintenir la pièce à usiner entre eux et fournir un meulage simultané des deux côtés de la pièce à usiner.

9. Patin hydrostatique (11a, 11b) selon la revendication 1, dans lequel
l'ouverture (39a) a un bord périphérique défini par le corps (17a) et ayant en outre un centre,
la au moins une poche (21a, 23a, 25a, 27a, 29a, 31a) étant disposée en relation radialement opposée à une partie du bord périphérique de ladite ouverture (39a) à une distance radiale du centre de ladite ouverture (39a), et une région libre formée dans le corps (17a) entre le bord périphérique de ladite ouverture (39a) et la poche radialement opposée, la région libre étant constituée de sorte que le patin hydrostatique (11a, 11b) n'applique sensiblement pas de pression de serrage à la pièce à usiner au niveau de la région libre lors de son utilisation.

10. Patin hydrostatique (11a, 11b) selon la revendication 9, dans lequel des distances radiales depuis le centre de l'ouverture (39a) dans le patin (11a, 11b) jusqu'à différentes parties du bord de la poche sont non-uniformes le long dudit bord.

11. Patin hydrostatique (11a, 11b) selon la revendication 10, dans lequel au moins une mesure desdites distances radiales est égale à au moins 1,1 fois un rayon de l'ouverture (39a) dans le corps (17a).

12. Patin hydrostatique (11a, 11b) selon la revendication 9, dans lequel un espacement entre un bord périphérique de la meule (9a, 9b) lorsqu'elle est reçue dans l'ouverture (39a) du patin (11a, 11b) et une partie radialement opposée du bord de poche est non-uniforme le long dudit bord de poche et dans lequel au moins une mesure dudit espacement est égale à au moins 0,1 fois un rayon de l'ouverture (39a) dans le corps (17a).

13. Patin hydrostatique (11a, 11b) selon la revendication 9 comportant plusieurs poches (21a, 23a, 25a, 27a, 29a, 31a) disposées dans une relation radialement opposée à l'ouverture (39a) du corps (17a) et dans lequel ladite région libre est formée entre le bord périphérique de ladite ouverture (39a) et au moins l'une des poches radialement opposées (21a, 23a, 25a, 27a, 29a, 31a).

14. Patin hydrostatique (11a, 11b) selon la revendication 9 comportant en outre un second corps (17a) et une seconde meule (9a, 9b) reçue dans une ouverture (39a) du second corps (17a), les deux corps et les deux meules (9a, 9b) étant disposés en relation mutuellement opposée pour maintenir la pièce à usiner entre eux et fournir un meulage simultané de deux côtés de la pièce à usiner.

15. Procédé de meulage de deux côtés pour obtenir un ensemble de plaquettes semiconductrices (w) formées par une configuration simple d'une meule double face, dans lequel l'ensemble de plaquettes (w) est obtenu à partir d'un appareil utilisant le patin hydrostatique (11a, 11b) de la revendication 1, chaque plaquette ayant une nanotopologie améliorée avec des variations de crête à vallée moyennes de 12 nm ou inférieures et chaque plaquette (w) étant formée en :
positionnant la plaquette (w) entre un premier et un second patin hydrostatique (11a, 11b) et entre une première et une seconde meule (9a, 9b) positionnées dans 4 une ouverture (39a) de chacun du premier patin hydrostatique (11a, 11b) et du second patin hydrostatique (11a, 11b), et maintenant la plaquette (w) entre lesdits patins hydrostatiques (11a, 11b) et entre lesdites meules (9a, 9b) de sorte qu'aucune pression de serrage notable n'est appliquée à la plaquette maintenue (w) adjacente aux bords périphériques des meules (9a, 9b) et adjacente aux bords périphériques des ouvertures dans les patins (11a, 11b).

16. Procédé de meulage de deux côtés comme défini dans la revendication 15 pour obtenir un ensemble de plaquettes semiconductrices (w), dans lequel l'ensemble comporte au moins 400 plaquettes produites consécutivement et ayant ladite nanotopologie améliorée et formées par ladite configuration unique.

17. Procédé de meulage de deux côtés comme défini dans la revendication 16 pour obtenir un ensemble de plaquettes semiconductrices (w), dans lequel l'ensemble comporte au moins 800 plaquettes.

18. Procédé de meulage de deux côtés comme défini dans la revendication 16 pour obtenir un ensemble de plaquettes semiconductrices (w), dans lequel chacune des plaquettes de l'ensemble est sensiblement exempt de marque centrale et d'anneau B.

19. Procédé de meulage de deux côtés comme défini dans la revendication 16 pour obtenir un ensemble de plaquettes semiconductrices (w), dans lequel chaque plaquette a une nanotopologie améliorée avec des variations de crête et de vallée moyennes d'environ 8 nm ou inférieures.
